# EUROPEAN PATENT APPLICATION

(11) **EP 0 823 313 A1**
(43) Date of publication of application: **11.02.1998**
(21) Application number: 97306063.5
(22) Date of filing: 08.08.1997
(51) Int. Cl.: B26D 5/08, H01L 41/09

(54) **Ultrasonic motor for cutter apparatus**

(30) Priority: 08.08.1996 JP 210257/96; 09.08.1996 JP 211449/96
(71) Applicant: SEIKO INSTRUMENTS INC., Chiba-shi, Chiba 261 (JP)
(72) Inventor: Imai, Saburo, c/o Seiko Instruments Inc., Chiba-shi, Chiba (JP); Kusuga, Masao, c/o Seiko Instruments Inc., Chiba-shi, Chiba (JP); Suzuki, Kenji, c/o Seiko Instruments Inc., Chiba-shi, Chiba (JP)
(74) Representative: Sturt, Clifford Mark

(57) **Abstract**

A drive mechanism of a cutter apparatus is simplified to reduce the size of the apparatus. A paper cutter apparatus comprising: a fixed cutting edge (2, 401); a movable cutting edge (3, 402); means for supporting said movable edge (4, 403); means for guiding said movable edge (3, 402) to move relative to said fixed edge (2, 401) so that the fixed and movable edges cooperate to cut the paper, characterised in that an ultrasonic motor (5, 405) is provided for moving said movable edge (3, 402).

## Description

The present invention relates to a paper cutter apparatus, particularly a paper cutter apparatus incorporated in a printer. More particularly, the present invention relates to a paper cutter apparatus which employs an ultrasonic motor as a drive source.

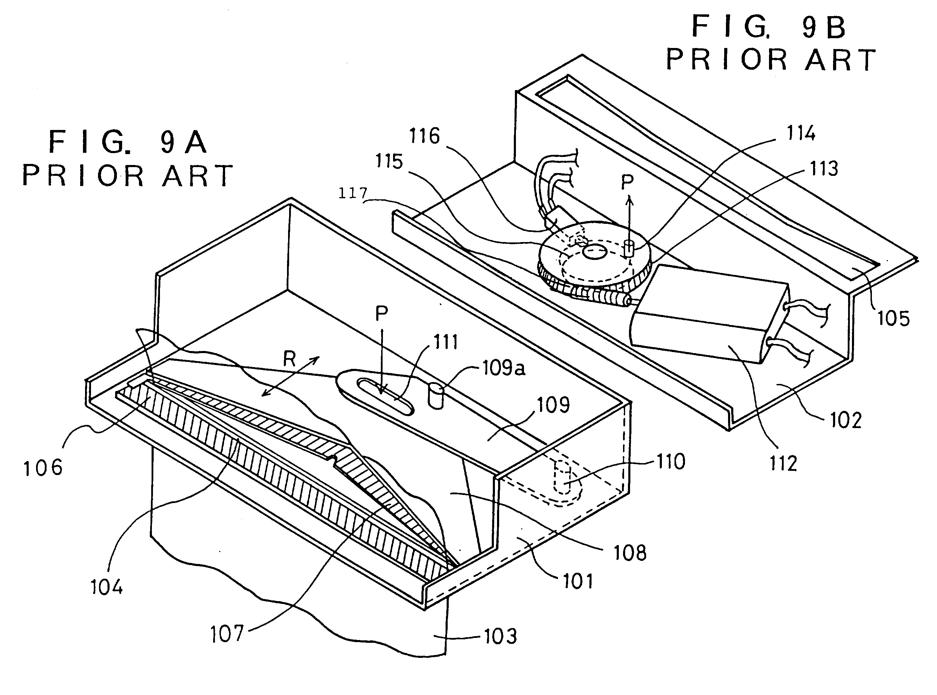

Cutter apparatuses can be roughly classified into three types, i.e., rotary, sliding and roller types. A sliding type cutter apparatus is often used in a small line printer or the like. Fig. 9 of the accompanying drawings is a view typically showing a general structure of a conventional sliding type cutter apparatus. As shown in the drawing, a lower case 101 and an upper case 102, which can be separated from each other, are used to assemble the cutter apparatus. The drawing shows the state in which the upper case 102 is detached from the lower case 101 to open the cutter apparatus. The upper case 102 is inverted 180 degrees from the illustrated position and combined with the lower case 101. The cutter apparatus is designed to cut recording paper 103, on which information is printed by a printer (not shown), along a width of the paper. A slit 104 is formed in the lower case 101 and extended along the paper width so as to pass the recording paper 103 upwards therethrough. It is to be noted that a slit 105 is also formed in the upper case 102 in such a manner that the slit 105 accords with the slit 104 in the lower case 101. A fixed cutting edge 106 is disposed on one side of the slit 104 formed in the lower case 101. Further, a movable cutting edge 107 is provided on the other side of the slit 104. The movable cutting edge 107 is fixed to a slider 108 in order that the movable cutting edge 107 can slide towards or away from the fixed cutting edge 106. The movable cutting edge 107 overlaps on the fixed cutting edge 106 to cut the recording paper 103 when moved to the front position, while it is separated from the fixed cutting edge 106 to allow passage of the recording paper 103 therebetween when moved to the back position. The slider 108 is connected with an oscillating link 109 through a pin 109a and moves forward/backward along a direction indicated by the arrow R. The oscillating link 109 is supported on a supporting point 110 and has a cam groove 111 formed at the end thereof.

On the other hand, a DC motor 112 is incorporated in the upper case 102 as a power source. A worm gear 113 is also employed. An eccentric pin 114 is implanted on the upper surface of the worm gear 113, and a position detecting cam 115 is attached on the lower surface of the same. A rotary position of the worm gear 113 is detected by a rotation detecting switch 116 through the position detecting cam 115. Rotation is detected in order to detect the front and back positions of the movable cutting edge 107. The worm gear 113 is engaged with a worm 117 fixed to a rotating shaft of the DC motor 112. When the upper case 102 is inverted and combined with the lower case 101, the eccentric pin 114 is adequately engaged with the cam groove 111 of the oscillating link 109 as shown by the arrow P. This converts the rotary motion of the DC motor 112 into the reciprocating motion of the slide 108 through the eccentric pin 114 and the oscillating link 109.

It can be concluded that the prior art sliding type cutter apparatus for use in a printer employs the existing DC motor 112 as a drive source and has merits in that stable supply is possible and the structure of a drive circuit is simple. However, a link mechanism for converting the rotary motion of the DC motor 112 into the linear motion of the slider 108 is necessary as long as the DC motor 112 is used as a drive source, thus requiring, for example, the oscillating link 109 as shown in Fig. 9. In addition, use of the existing DC motor 112 limits reduction in size and thickness of the apparatus. Further, a reduction mechanism such as a worm gear 113 is needed for reducing a speed of the rotary motion of the DC motor 112, resulting in complication of the structure and increase in cost. Furthermore, some noise is generated when operating the DC motor 112 or the worm gear 113, which is unfavourable depending on applications.

The roller type cutter apparatus has such a structure as that the rotary cutting edge rotates and reciprocates along the fixed cutting edge. This type of cutter apparatus has a drive motor assembled therein with reduced size and weight, and it rarely generates paper jamming as compared with the rotary or sliding type cutter apparatus because the paper does not pass through a slit with the roller type cutter apparatus. Further, it is enough to extend only the fixed cutting edge when changing the cutting width, which facilitates serialisation of various kinds of cutting width with low cost. However, spaces In which the round cutting edge moves are required on the right and left sides in addition to the cutting width, and a dead space is increased to some extent in the roller type cutting apparatus as compared with the rotary or sliding type cutting apparatus.

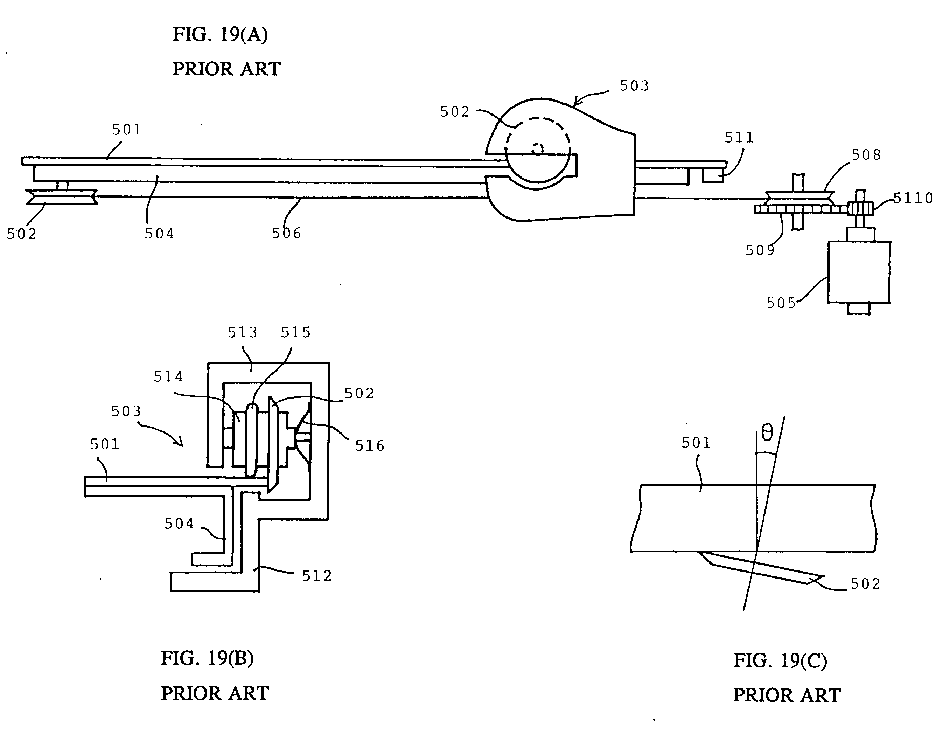

Fig. 19A, 19B and 19C typically show a general structure of a conventional roller type cutter apparatus As shown in Fig. 19A, the roller type cutter apparatus is provided with a fixed cutting edge 501, a round cutting edge 502, a movable body 503 and a guide portion 504 and is adapted to cut paper (not shown) along the paper width direction. The fixed cutting edge 501 is fixedly provided along the paper width direction. The guide portion 504 is extended in parallel with the fixed cutting edge 501. The movable body 503 can be engaged with the guide portion 504 to move along the paper width direction. The round cutting edge 502 is incorporated in the movable body 503 and slides in contact with the fixed cutting edge 501 to cut the paper sandwiched therebetween along the paper width direction. A conventional DC motor 505 is used as a drive source for the movable body 503. The movable body 503 is connected to a wire 506. The wire 506 is wound around a pair of pulleys 507 and 508. A rotary shaft of the DC motor 505 is connected to one pulley 508 through a reduction gear 509 and a pinion 510. Rotary motion of the DC motor 505 is transmitted to the pulley 508 through the pinion 510 and the reduction gear 509 and the wire 506 moves in the both directions so that the movable body 503 reciprocates along the guide 504 in the paper width direction. It is to be noted that a limit switch 511 is provided towards an end of the fixed cutting edge 501 in order to detect a position of the movable body 503.

Fig. 19B illustrates a cross section of the movable body 503. The movable body 503 consists of, e.g., a resin moulded product and is separated into upper and lower portions with the fixed cutting edge 501 in the center. A lower portion 512 is engaged with the guide portion 504 in the sliding manner. An upper portion 513 accommodates a drum 514, a ring 515, a round cutting edge 502 and a leaf spring 516 therein. The ring 515 is composed of a rubber member or the like and disposed around the drum 514. When the movable body 503 travels on the fixed cutting edge 501 along the paper width direction, the ring 515 rotates by frictional force thereby rotating of the drum 514. Since the round cutting edge 502 fixed to the drum 514 rotates by revolutions of the drum 514, the paper(not shown) sandwiched between the fixed cutting edge 501 and the round cutting edge 502 is cut. The leaf spring 516 is incorporated to stably hold the drum 514 inside the movable body 503.

Fig. 19C is a partial plan view of the cutter apparatus, showing a relative relationship of positions of the fixed cutting edge 501 and the round cutting edge 502. As shown in the drawing, a rotational axis of the round cutting edge 502 is inclined at θ with respect to the fixed cutting edge 501, and such an arrangement enables stable cutting of the paper. The round cutting edge 502 is in contact with the fixed cutting edge 501 at a predetermined inclined angle θ, and the round cutting edge 502 slides on the fixed cutting edge 501 to cut the paper sandwiched therebetween along the paper width direction. A diameter of the round cutting edge 502 can be reduced to, e.g., approximately 15mm.

It can be recognised that the prior art roller type cutter apparatus has such an advantage as that use of the existing DC motor 505 as a power source ensures the stable supply or the simple structure of a drive circuit. However, a mechanism for converting the rotary motion of the DC motor 505 into linear motion of the movable body 503 as long as the DC motor 505 is used as a power source, and pulleys or a wire are required as shown in Figs. 19, for example. Further, use of the existing DC motor 505 limits reduction in size of the apparatus. Moreover, a reduction mechanism such as a gear train is necessary in order to decelerate the rotary motion of the DC motor 505, resulting in the complicated structure and the increased cost. Additionally, the DC motor, the gear train and pulleys produce some noise during operation, and hence they may not be suitable for certain application.

It is, therefore, an object of the present invention to realise a structure for solving the above-mentioned drawbacks of the prior art paper cutter apparatus.

Accordingly, in a first aspect, the present invention provides a paper cutter apparatus comprising: a fixed cutting edge; a movable cutting edge; means for supporting said movable edge; means for guiding said movable edge to move relative to said fixed edge so that the fixed and movable edges cooperate to cut the paper, characterised in that an ultrasonic motor is provided for moving said movable edge.

In a second aspect, the present invention provides a sliding type cutter apparatus which cuts paper along a direction of a width of the paper comprising:
a slit extending along the paper width direction so as to pass the paper therethrough;
a fixed cutting edge provided on one edge of the slit;
a movable cutting edge, provided on the other edge of the slit, which can slide towards or away from the fixed cutting edge, overlaps on the fixed cutting edge to cut the paper when moved to the front position, and is separated from the fixed cutting edge to allow passage of the recording paper therebetween when moved to the rear position; and
an ultrasonic motor for ensuring the movable cutting edge to reciprocate between the front and rear positions.

In a third aspect, the present invention provides a rotary type cutter apparatus comprising a fixed cutting edge, a moving cutting edge, a movable body and a guide portion to cut paper along the paper width direction, the fixed cutting edge being fixedly provided along the paper width direction, the guide portion being extended in parallel with the fixed cutting edge, the movable body being capable of engaging with the guide portion to move along the paper width direction, the moving cutting edge being incorporated in the movable body and sliding in contact with the fixed cutting edge to cut the paper sandwiched therebetween along the paper width direction, the cutter apparatus characterised in that the movable body has an ultrasonic motor therein and is self-propelled along the guide portion.

Thus, a sliding type cutter apparatus for a printer according to the present invention is designed to cut recording paper having information printed by a printer thereon along a width of the paper and is basically provided with a slit, a fixed cutting edge and a movable cutting edge. The slit is extended along the paper width so as to pass the recording paper therethrough. The fixed cutting edge is disposed on one side of the slit. The movable cutting edge is arranged on the other side of the slit and slides towards or away from the fixed cutting edge. The movable cutting edge overlaps on the fixed cutting edge to cut the recording paper when moved to the front position, while the movable cutting edge is separated from the fixed cutting edge to allow passage of the recording paper therethrough when moved to the back position. It is a characteristic of the present invention to use an ultrasonic motor as a drive source in order to drive the movable cutting edge to reciprocate between the front and back positions.

Preferably, the ultrasonic motor may be of a linear type and uses its linear output to directly drive the movable cutting edge to reciprocate. Depending on the situation, the linear type ultrasonic motor may be substituted by a rotary type counterpart. In such a case, there is incorporated a transmission mechanism for converting the rotary output of the rotary type ultrasonic motor into the linear output and transmitting the converted output to the movable cutting edge in order to realise the reciprocating drive.

According to the present invention, the ultrasonic motor is incorporated as a drive source for the movable cutting edge. In particular, use of the linear type ultrasonic motor directly enables the movable cutting edge to reciprocate along the forward/backward direction, and eliminates the need of a link mechanism for converting rotary motion into the reciprocating motion as in the prior art, thereby realising reduction in size and thickness of the cutter apparatus. Reduction in size and thickness of the cutter apparatus is recently demanded as well as reduction in size and thickness of a printer, and hence employment of the ultrasonic motor as a drive source is very advantageous. Elimination of a link mechanism for converting the rotary motion into the linear motion enables direct drive with respect to the movable cutting edge, thereby providing a cost-effective cutter apparatus with a number of constituent parts reduced. In certain circumstances, the rotary type ultrasonic motor may replace the linear type counterpart. In such a case, although a mechanism for converting the rotary motion into the reciprocating motion is required, a mechanism for decelerating the rotary motion of the DC motor in the prior art is no longer necessary, thus simplifying the configuration of the cutter apparatus.

Further, a roller type cutter apparatus according to the present invention comprises a fixed cutting edge, a moving cutting edge, a movable body and a guide portion to cut paper. The paper is preferabally cut widthwise. The fixed cutting edge is preferabally fixedly provided along the paper width direction. The guide portion is extended in parallel with the fixed cutting edge. The movable body can be engaged with the guide portion to move along the paper width direction. The moving cutting edge is incorporated in the movable body and slides in contact with the fixed cutting edge to cut the paper sandwiched therebetween along the paper width direction. As a characteristic matter of the present invention, the movable body has an ultrasonic motor therein as a drive source and is self-propelled along the guide portion. The ultrasonic motor is preferably of a linear type motor which demonstrates the linear displacement. Otherwise, it is possible to use a rotary type ultrasonic motor which demonstrates rotary displacement. Further, the moving cutting edge is a round cutting edge which rotates in accordance with the self propelling action of the movable body. Otherwise, the moving cutting edge may be a surface-mounted cutting edge which is directly attached on a surface of the movable body and moves together with the movable body in parallel with the fixed cutting edge.

According to the present invention, the ultrasonic motor serving as a drive source is incorporated in the movable body itself. This configuration ensures the movable body to be self-propelled along the guide portion and simplifies the structure of the cutter apparatus. A mechanism for converting the rotary motion of the DC motor into the linear motion of the movable body or a mechanism for decelerating the rotary motion in the prior art is no longer necessary thereby enabling reduction in size and thickness of the cutter apparatus.

The novel features believed characteristic of the invention are set forth in the appended claims. The invention itself, however, as well as other features and advantages thereof, will be best understood by reference to the detailed exemplary description which follows, read in conjunction with the accompanying diagrammatic drawings, wherein:
Fig. 1A is a plan view showing a sliding type cutter apparatus for a printer according to the present invention;
Fig. 1B is a cross-sectional view showing the sliding type cutter apparatus for a printer according to the present invention;
Fig. 2A is a cross-sectional view showing a typical structure of a linear type ultrasonic motor incorporated into the sliding type cutter apparatus for a printer according to the present invention;
Fig 2B is a cross-sectional view showing a typical structure of a piezoelectric device of a linear type ultrasonic motor incorporated into the sliding type cutter apparatus for a printer according to the present invention;
Fig. 2C is a circuit diagram showing an example of a drive circuit portion of the piezoelectric device of the linear type ultrasonic motor incorporated into the sliding type cutter apparatus for a printer according to the present invention;
Fig. 3 is a schematic partial view showing a structure of a superimposed piezoelectric device of the linear type ultrasonic motor incorporated into a sliding type cutter apparatus for a printer according to the present invention;
Fig. 4 is a plan view showing another embodiment of a sliding type cutter apparatus for a printer according to the present invention;
Fig. 5 is a perspective view showing a rotary type ultrasonic motor incorporated into the sliding type cutter apparatus for a printer illustrated in Fig. 4;
Fig. 6 is an exploded perspective view showing a structure of the rotary type ultrasonic motor illustrated in Fig. 5;
Fig. 7 is a typical view for explaining the operation of the rotary type ultrasonic motor illustrated in Fig. 5;
Fig. 8 is a cross-sectional view showing an example of a printer apparatus to which the sliding type cutter apparatus for a printer according to the present invention is incorporated;
Fig. 9 is an exploded perspective view showing a prior art sliding type cutter apparatus for a printer;
Fig 10A is a cross-sectional view showing the basic structure of the rotary type cutter apparatus according to the present invention;
Fig. 10B is a partial front view showing the basic structure of the rotary cutter apparatus according to the present invention;
Fig. 11 is a typical view showing a modification of the rotary type cutter apparatus according to the present invention;
Fig. 12 is a cross-sectional view showing another modification of the rotary type cutter apparatus according to the present invention;
Fig. 13 is a typical view showing still another modification of the cutter apparatus according to the present invention;
Fig. 14A is a typical view showing a specific example of the pressure applying mechanism adopted in the rotary type cutter apparatus according to the present invention;
Fig. 14B is a typical view showing a specific structure of a pressure applying mechanism adopted in the rotary type cutter apparatus according to the present invention;
Fig. 15A is a front view showing the shape of the linear type ultrasonic motor assembled in the rotary type cutter apparatus according to the present invention;
Fig. 15B is a cross-sectional block diagram of the linear type ultrasonic motor assembled in the rotary type cutter apparatus according to the present invention;
Fig. 15C is a typical view showing a superimposed piezoelectric device of the linear type ultrasonic motor assembled in the rotary type cutter apparatus according to the present invention;
Fig. 15D is a partial circuit diagram showing an example of a drive circuit for the piezoelectric device of the linear type ultrasonic motor assembled in the rotary type cutter apparatus according to the present invention;
Fig. 16 is a typical view showing the structure of the linear type ultrasonic motor using the superimposed piezoelectric device assembled in the rotary type cutter apparatus according to the present invention;
Fig. 17 is an exploded perspective view showing a specific structure of a rotary type ultrasonic motor incorporated in the cutter apparatus according to the present invention;
Fig. 18 is a typical view for explaining the operation of the rotary type ultrasonic motor incorporated in the cutter apparatus according to the present invention;
Fig. 19A is an appearance view showing the general structure of the prior art cutter apparatus;
Fig. 19B is a cross-sectional view showing the structure of a movable body of the prior art cutter apparatus; and
Fig. 19C is a partial plan view showing the prior art cutter apparatus.

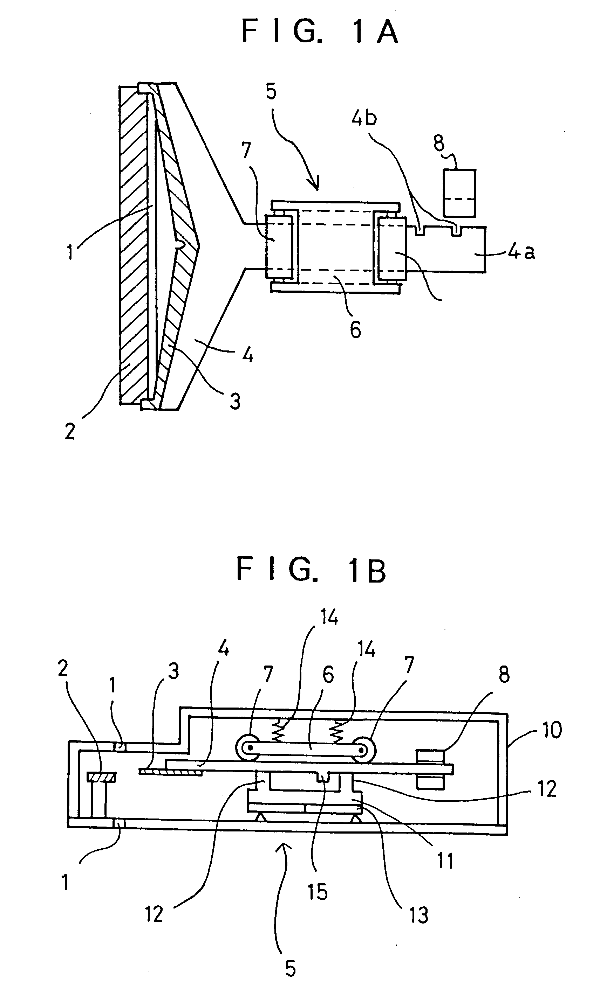

Fig. 1A and 1B show a first embodiment of a cutter apparatus according to the present invention, wherein 1A is a plan view and 1B is a cross-sectional view. As shown in Fig. 1A, the sliding type cutter apparatus for a printer according to the present invention is designed to cut recording paper (not shown), having information printed by a printer thereon, along a width of the paper and provided with a slit 1, a fixed cutting edge 2 and a movable cutting edge 3. The slit 1 is extended along the paper width direction so as to pass the recording paper therethrough. The fixed cutting edge 2 is provided on the left-hand-side edge of the slit 1. The movable cutting edge 3 is arranged on the right-hand-side edge of the slit 1. The movable cutting edge 3 is fixed to a slider 4 so as to be capable of sliding towards or away from the fixed cutting edge 2. The movable cutting edge 3 overlaps on the fixed cutting edge 2 to cut the recording paper when moved to the front position, and it is separated from the fixed cutting edge 2 to allow passage of the recording paper therebetween when moved to the back position.

As a characteristic matter, the sliding type cutter apparatus for a printer according to the present invention uses an ultrasonic motor 5 as a drive source to ensure the movable cutting edge 3 to reciprocate between the front and back positions via the slider 4. In this embodiment, the ultrasonic motor 5 is of a linear type and uses its linear output to directly drive the movable cutting edge 3 to reciprocate. The ultrasonic motor 5 is fixed to a longitudinal portion 4a of the slider 4 through a pair of rollers 7 attached to a holder frame 6. Position detecting grooves 4b are formed on the longitudinal portion 4a. The position detecting grooves 4b are optically detected by a photosensor 8.

As shown in Fig. 1B, the sliding type cutter apparatus for use in a printer according to the present invention is incorporated in a case 10. The ultrasonic motor 5 is vertically separated into two portions with the slider 4 in the center. An oscillator 11 is positioned below the slider 4. The oscillator 11 is provided with a pair of projections 12 in contact with a lower surface of the slider 4. Further, a piezoelectric device 13 is joined to the oscillator 11. On the other hand, the pair of rollers 7 assembled in the holder frame 6 are arranged above the slider 4. The holder frame 6 is pressed downward by pressure spring 14. Although a coil spring is used as the pressure spring 14 in the present embodiment, the present invention is not restricted to this type and a leaf spring may be employed instead. The pressure of the pressure spring 14 allows a frictional force to develop between the slider and the pair of projections such that oscillation of the oscillator 11 causes the slider 4 to move forward or backward. A stopper 15 is formed on the slider 4 to specify the front and back positions to which the movable cutting edge 3 moves. In other words, the movable cutting edge 3 is at the front position when the stopper 15 is brought into contact with the front projection 12, while the movable cutting edge 3 is at the back position when the stopper 15 is brought into contact with the rear stopper 12.

In this manner, adopting the linear type ultrasonic motor 5 enables to directly drive the movable cutting edge 3 to reciprocate in this embodiment This can eliminate the link mechanism for converting the rotary motion into the reciprocating motion or a mechanism for decelerating the rotary motion of the DC motor which have been required in the prior art, thereby simplifying the structure of the cutter apparatus. Basically, the ultrasonic motor 5 has such a structure that the oscillator 11 and the piezoelectric device 13 are superimposed one on another, and is smaller and thinner than the prior art DC motor. This structure allows reduction in size and thickness of the sliding type cutter apparatus for a printer. Further, since the ultrasonic motor 5 is based on the friction drive, the slider 4 can precisely and rapidly stop at a predetermined position by frictional force when the power supply is turned off, increasing self-retaining ability. The present invention is also characterised in that the ultrasonic motor 5 produces less noise as compared with the conventional DC motor. Further, the ultrasonic motor hardly generates a magnetic field, unlike the DC motor, thus rarely affecting the environment.

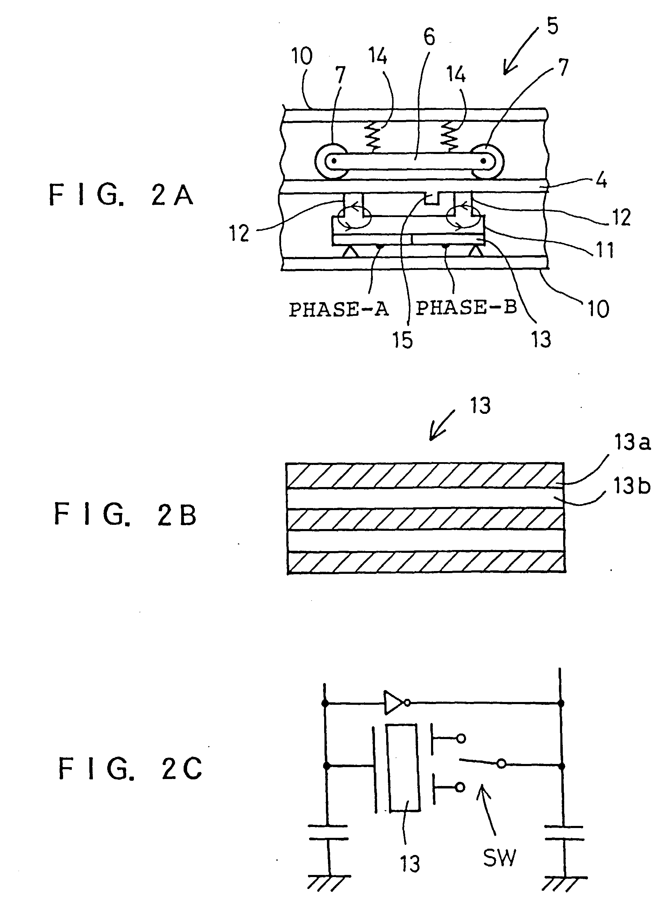

The structure and operation of the linear type ultrasonic motor will now be described with reference to Fig. 2. Fig. 2A shows a shape of the ultrasonic motor 5 along a direction of linear displacement. As shown in the drawing, the ultrasonic motor 5 linearly displaces the slider 4. Here, pressure is applied to the slider 4 by the pressure spring 14 downward. The slider 4 is, therefore, pressed against the pair of projections 12 of the oscillator 11. A friction material is provided on the top of each projection 12 of the oscillator 11. The split piezoelectric device 13 is attached to the lower surface of the oscillator 11. When high frequency voltages having phases A and B which are 90 degrees out of phase from each other are applied to a pair of piezoelectric devices 13, each projection 12 of the oscillator 11 starts the elliptic motion as shown by the arrow. This elliptic motion ensures the slider 4 to gain the drive force through the frictional force and to be self-propelled in the forward/backward direction. Further, a moving direction of the sliding 4 can be reversed by changing over the phase relationship of the high-frequency voltages having the phases A and B. In this manner, since the linear type ultrasonic motor utilises the frictional force against the slider to obtain the linear displacement drive force, friction of the friction material provided on the top of the pair of projections 12 determines duration of life of the linear motor 5. In order to prolong duration of life of the ultrasonic motor 5, the substance of the friction material must be appropriately determined.

It is to be noted that the projections do not have to be provided to the oscillator and the friction material may be attached to the flat top of the oscillator (not shown). In addition, the stopper 15 does not have to be provided for stopping the slider 4, and the photosensor 8 can be used to carry out positioning.

Moreover, the DC motor is electric-current-driven whereas the ultrasonic motor basically is voltage-driven, and realisation of the low-current driving is desired when applying the motor to the cutter apparatus. As a drive circuit, an oscillating circuit for outputting a high frequency voltage must be incorporated in place of a simple constant-current circuit, which may lead to complicated structure. In regard of the specification of this drive circuit, the power supply voltage can be 12V and a rated current can be approximately 0.2 through 0.3A. The ultrasonic motor 5 is actually driven by using an alternating voltage of, e.g., 100 kHz, and its crest value is approximately 40 - 6OVp-p. The pressure applied to the ultrasonic motor 5 is ranged between, for example, several hundreds grams to several kilograms. Incidentally, use of the superimposed piezoelectric device in which a plurality of electrodes 13a and piezoelectric ceramics 13b are alternately superimposed one on another, as shown in Fig. 2B, can obtain a high output torque. Further, as shown in Fig. 2C, a self-excited drive system in which the piezoelectric device 13 is integrated in the oscillating circuit as a part of the drive circuit can be adopted. In this case, a direction of the ultrasonic motor is changed over by using a switch SW.

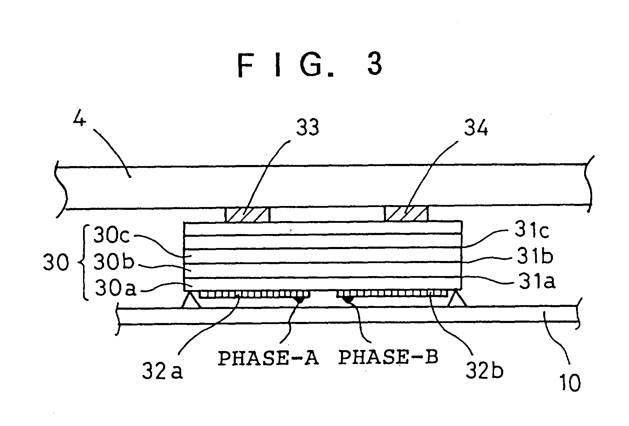

Fig. 3 shows another embodiment of the linear type ultrasonic motor serving as a drive source of the slider 4 of the cutter apparatus according to the present invention. The basic structure of the cutter apparatus is similar to that shown in Fig. 1. The linear type ultrasonic motor in this embodiment is constituted by using a superimposed piezoelectric device 30 in which electrodes 31a, 31b, 31c, ... and piezoelectric devices 30a, 30b, 30c, ... are alternately superimposed and it is structurally different from the linear type ultrasonic motor shown in Fig. 2A in that the superimposed piezoelectric device 30 itself functions as an oscillator.

The greater thrust can be obtained by configuring the linear type ultrasonic motor in this way, and the piezoelectric device does not have to be connected to the oscillator, thereby realising a less expensive cutter apparatus. External electrodes 32a, 32b are formed on one edge of the superimposed piezoelectric device 30 along the superimposing direction, and predetermined electric drive signals are input to these electrodes for driving. Further, a pair of friction members 33 and 34 are mounted on the other edge of the superimposed piezoelectric device 30 in the superimposing direction, i.e., the edge on which the slider 4 slides.

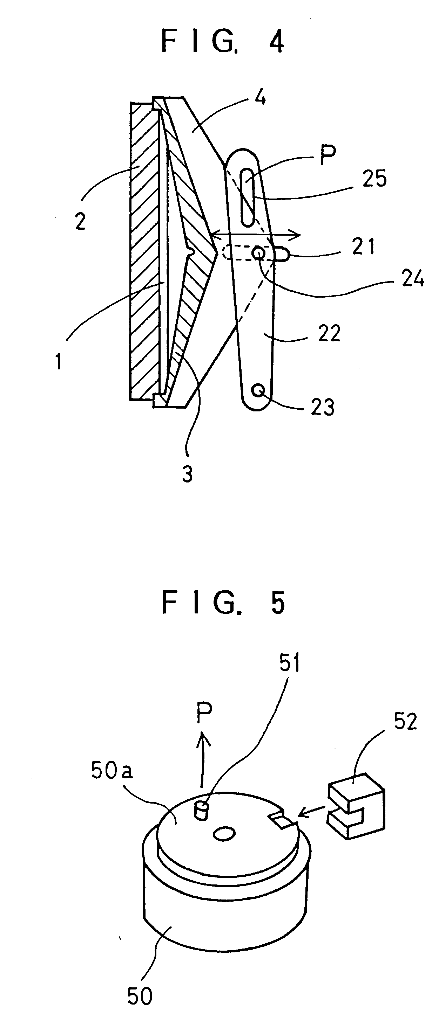

Fig. 4 is a partial plan view showing another embodiment of the sliding type cutter apparatus for a printer, wherein parts except the ultrasonic motor as a drive source are illustrated. It is to be noted that like reference numerals denote like or corresponding parts as in the first embodiment shown in Fig. 1 for easy understanding. A fixed cutting edge 2 is positioned on the left-hand-side edge of the slit 1, while the movable cutting edge 3 is positioned on the right-hand-side edge of the slit 1. The movable cutting edge 3 is fixed to a slider 4. The slider 4 has a guide groove 21 formed thereto. An oscillating link 22 is incorporated so as to be capable of oscillating with a supporting point 23 in the center. A guide pin 24 implanted in the oscillating link 22 is engaged with the guide groove 21 of the slider 4. A cam groove 25 is formed on an end of the oscillating link 22. Oscillation of the oscillating link 22 with the supporting point 23 in the center urges the slider 4 to reciprocate in the forward and backward directions as shown by the arrow.

Fig. 5 shows a rotary type ultrasonic motor 50 assembled in the cutter apparatus illustrated in Fig. 4. The ultrasonic motor 50 is provided with a rotor ring 50a on which an eccentric pin 51 is implanted. Further, a photosensor 52 is arranged for detecting a position at which the rotor ring 50a rotates. As indicated by the arrow P, the eccentric pin 51 provided to the rotary type ultrasonic motor 50 engages with the cam groove 25 formed on the oscillating link 22 shown in Fig. 3. With such an arrangement, the rotary motion of the ultrasonic motor 50 is converted into the reciprocating motion of the slider 4. As described above, the rotary output of the rotary type ultrasonic motor 50 is converted into the linear output to be transmitted to the slider 4 in order to realise the reciprocating drive with respect to the movable cutting edge 3 in this embodiment. As different from the conventional cutter apparatus using the DC motor as a drive source, the rotary type ultrasonic motor 50 has a low-speed high torque and can directly drive the oscillating link to oscillate without using any reduction mechanism.

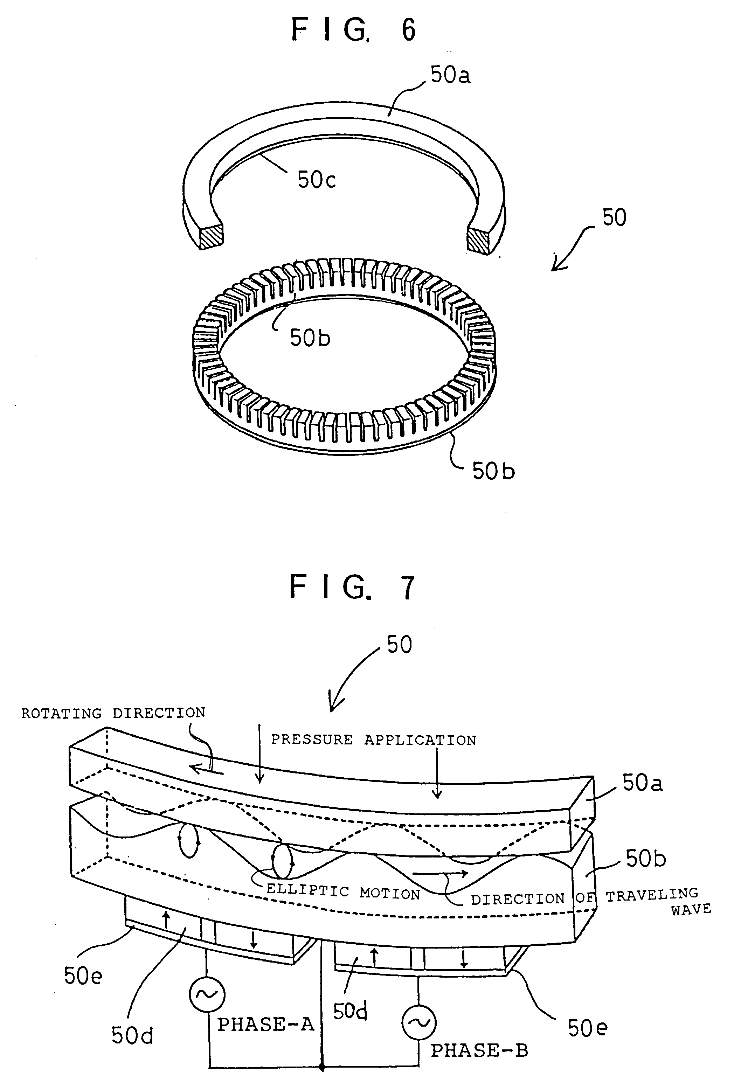

Fig. 6 is an exploded perspective view typically showing a specific structure of the rotary type ultrasonic motor 50 illustrated in Fig. 5. The rotary type ultrasonic motor 50 basically adopts the combined use of a stator ring 50b and a rotor ring 50a. The stator ring 50b consists of an oscillator having irregularities formed along its circumferential direction, and an annular piezoelectric device 50d is joined to the bottom surface of the stator ring 50b. Further, a surface of the rotor ring 50a with which the stator ring 50b is in contact is lined with a friction material (lining material) 50c.

Fig. 7 typically shows the operation of the rotary type ultrasonic motor 50 illustrated in Fig. 6. As shown in the drawing, a pair of piezoelectric devices 50d consisting of piezoelectric ceramics or the like are provided on the bottom portion of the stator ring 50b at adequate intervals. An alternating voltage having a phase A is applied to one piezoelectric device 50d through an electrode 50e. An alternating voltage having a phase B is applied to the other piezoelectric device 50d through the electrode 50e. The phases A and B are, e.g., a sine wave and a cosine wave, and their phases are shifted from each other 90 degrees. In this manner, application of the alternating voltages having the phases A and B to the pair of piezoelectric devices 50d involves generation of a travelling wave which propagates toward the right-hand-side direction of the stator ring 50b. It is to be noted that reversing the phase relationship between the phases A and B causes the direction of the travelling wave to be reversed. The rotor ring 50a is provided on the stator ring 50b generating the travelling wave. When the pressure is applied to the rotor ring 50a from the top, the rotor ring 50a rotates upon receiving a tangential force by the elliptic motion at a part where the rotor ring is brought into contact with a wave front of the travelling wave. In this manner, the rotor ring 50a overlaps on the stator ring 50b, and the travelling wave is generated in the stator ring 50b. On the other hand, the rotor ring 50a is pressed by the strong force. Each point on the surface of the stator ring 50b in which the wave is generated performs the elliptic motion having the amplitude of several µm. The surface of the rotor ring 50a is in contact with the wave front, and hence it is affected by the elliptic motion to rotate. As shown in Fig. 6, the actual rotary type ultrasonic motor has a groove formed on the stator ring 50b and has a sinking-comb-like structure. Adoption of the sinking-comb-like structure can increase the amplitude of the elliptic motion. Also, the effect for shedding the powder produced by friction on the groove can be expected. Rotation is transmitted via the thin lining material (friction material) 50c provided between the stator ring 50b and the rotary ring 50a Provision of the lining material (friction material) 50c can avoid reduced duration of life due to friction. Here, assuming that one elliptic motion causes the rotor ring 50a to move 1 µm, 30,000 elliptic motions per one second can rotate the rotor ring 50a at 3 cm/second. In order to drive the ultrasonic motor, there is required a drive circuit for converting the d.c. power supply voltage into alternating voltages having two phases (since and cosine waves) . A drive frequency is set to a value with which the strong mechanical vibration of the stator ring 50b is apt to be generated.

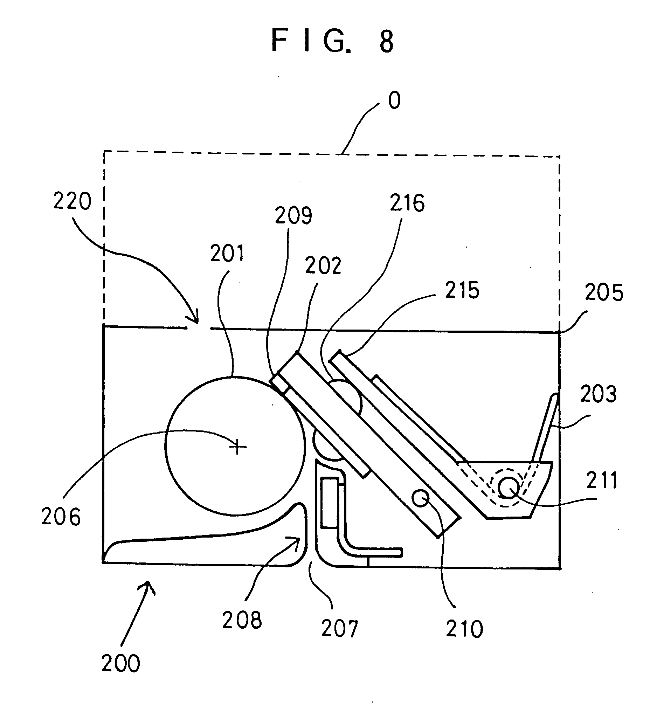

Fig. 8 shows a structure in which a cutter apparatus 0 is integrated with a printer apparatus 200. Here, description will be given as to the structure of the printer apparatus 200 for reference. The printer apparatus 200 includes a platen 201, a thermal head 202 and a spring member 203 and is assembled by using a frame 205. The platen 201 consists of a cylindrical rubber member or the like and is so held as to be capable of rotating around an axis 206 which is in parallel with a width direction of recording paper (not shown). It is to be noted that the recording paper is inserted from a slit 207 which is opened at the bottom of the frame 205, supplied between the platen 201 and the thermal head 202 through a guide portion 203, and ejected to the cutter apparatus 0 through a slit 220 formed on the upper part of the frame 205. A head 202 is in the rear of and opposed to the platen 201 with the recording paper therebetween. This printer apparatus 200 is a thermal line printer and has a printing portion 209 consisting of an heating device array provided above the head 202 along the paper width direction. Respective lines of information are printed one by one on the recording paper by power-feeding the printing portion 209 in accordance with predetermined data. It is to be noted that the present invention is not restricted to the thermal printer and it can be naturally applied to a line printer utilising any other type of head. The head 202 can swivel in the clockwise or counterclockwise direction around an axis 210 parallel with the axis 206 of the platen 201. In the illustrated state, the head 202 swivels in the regular direction, and the printing portion 209 positioned above the axis 210 is pressed against the platen 202. A pressing plate 215 is assembled in the rear of the head 202 and in contact with a projection 216 provided on the back portion of the head 202. The pressing plate 215 can swivel around a shaft 211. The above-described spring member 203 is incorporated in the shaft 211. The spring member 203 pushes the pressing plate 215 forward and also pushes the head 202 against the platen 206 via the projection 216.

As mentioned above, according to the present invention, the sliding type cutter apparatus for a printer uses the ultrasonic motor to ensure the movable cutting edge to reciprocate between the front and rear positions. This can eliminate the drive mechanism such as the DC motor, the worm gear, the oscillating link and others, thereby simplifying the structure of the sliding type cutter apparatus for a printer. Further, adoption of the ultrasonic motor enables sudden stop of the movable cutting edge by high-holding force of that motor, improving controllability. Since the ultrasonic motor generates less noise as compared with the prior art DC motor, it is preferable to applications requiring silence. In addition, as different from the DC motor, the ultrasonic motor does not produce the magnetic field, it is suitable for applications that the magnetic field adversely affects.

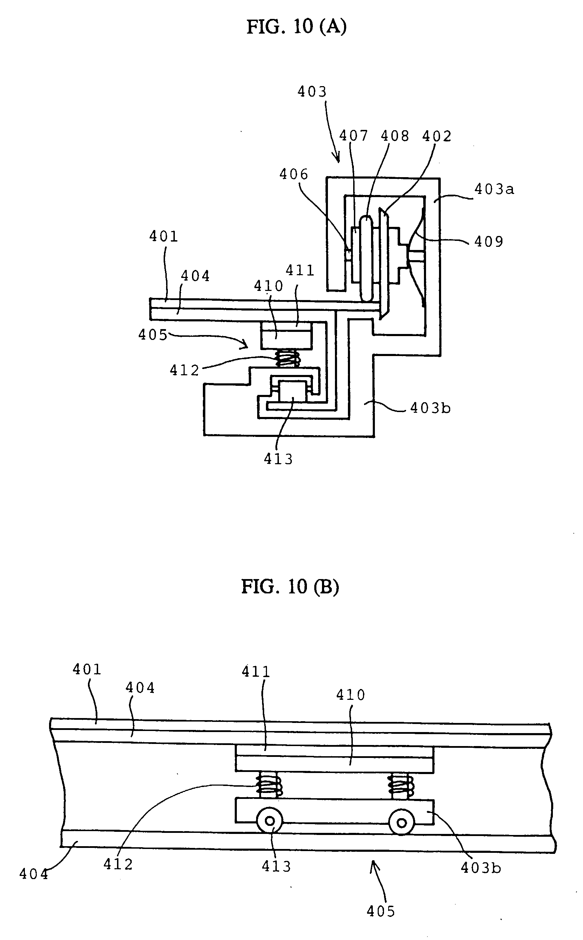

Fig. 10 typically shows a basic structure of a cutter apparatus according to another embodiment of the present invention, wherein Fig. 10A is a cross-sectional view and Fig. 10B is a front view showing the primary part. As shown in Fig. 10A, the cutter apparatus is provided with a fixed cutting edge 401, a moving cutting edge 402, a movable body 403 and a guide portion 404. The cutter apparatus is adapted to cut paper (not shown) along the paper width direction. The paper width direction is generally perpendicular to the direction of travel of the paper through a printer. However, it is preferable to cut the paper along its own width i.e. perpendicularly from one long edge to an other long edge of the paper. It will be appreciated, though, that in certain circumstances it is preferable to cut the paper along a line not perpendicular to the direction of travel of the paper through the printer and/or not along the width of the paper. The fixed cutting edge 401 is fixedly provided along the paper width direction (direction perpendicular to the drawing). The guide portion 404 has a U-shaped cross section and is extended in parallel with the fixed cutting edge 401 along the paper width direction. The movable body 403 uses, for example, a resin moulded product as a frame and is divided into an upper part 403a and a lower part 403b with the fixed cutting edge 401 in the center. The lower part 403b of the movable body 403 is engaged with the guide portion 404 and capable of moving along the paper width direction. The moving cutting edge 402 is incorporated in the upper part 403a of the movable body 403 and slides in contact with the fixed cutting edge 401 to cut paper (not shown) sandwiched therebetween along the paper width direction. In this embodiment, the moving cutting edge 402 is a round cutting edge which rotates in accordance with travel of the movable body 403. As a characteristic matter of the present invention, the movable body 403 includes an ultrasonic motor 405 as a drive source and is self-propelled along the guide groove 404. In this embodiment, the ultrasonic motor 405 is of a linear type which shows the linear displacement along the paper width direction. Assembling such an ultrasonic motor 405 in the movable body 403 enables the movable body 403 to be self-propelled, and a mechanism for converting the rotary motion of the DC motor into the linear motion or a mechanism for decelerating the rotary motion in the prior art is no longer necessary, thereby extremely simplifying the structure of the cutter apparatus.

A drum 407 is incorporated in the upper portion 403a of the movable body 403 through a rotary shaft 406. A ring 408 consisting of a rubber member and the moving cutting edge (round cutting edge) 402 are disposed around the drum 407. Further, a leaf spring 409 is assembled to press the moving cutting edge 402 toward the fixed cutting edge 401. The drum 407 rotates by frictional force between the upper surface of the fixed cutting edge 401 and the ring 408 as the movable body 403 travels. The moving cutting edge 402 rotates to cut the paper (not shown) between the moving cutting edge 402 and the fixed cutting edge 401. The ultrasonic motor 405 assembled in the lower portion 403b of the movable body 403 has such a structure as that a piezoelectric device 410 is connected to an oscillator 411. A pressure spring 412 is incorporated in order to push the oscillator 411 against the inner top surface of the guide portion 404 through the piezoelectric device 410, thereby constituting a pressure applying mechanism. Further, a roller 413 is provided in the lower part of the ultrasonic motor 405 to smooth the self propelling action of the movable body 403.

Fig. 10B is a partial front view typically showing the self-propelling state of the ultrasonic motor 405. As shown in the drawing, the ultrasonic motor 405 is self-propelled along the paper width direction (direction parallel to the drawing) in contact with the inner top and bottom surfaces of the guide portion 404. In particular, application of a predetermined alternating voltage to the piezoelectric device 410 causes the oscillator 411 to oscillate in a predetermined direction. This oscillation produces frictional force between the oscillator 411 and the inner top surface of the guide portion 404, thus allowing self-propelling action of the ultrasonic motor 405. This motion is smoothed by a roller 413. In order to obtain the necessary frictional force between the oscillator 411 and the inner top surface of the guide portion 404, the pressure spring 412 is provided between the lower portion 403b of the movable body 403 and the piezoelectric device 410. The roller 413 is attached to the lower portion 403b of the movable body 403 so that the ultrasonic motor 405 can smoothly travel along the bottom of the guide portion 404. The ultrasonic motor 405 is of a linear type as described above and demonstrates the linear displacement along the paper width direction.

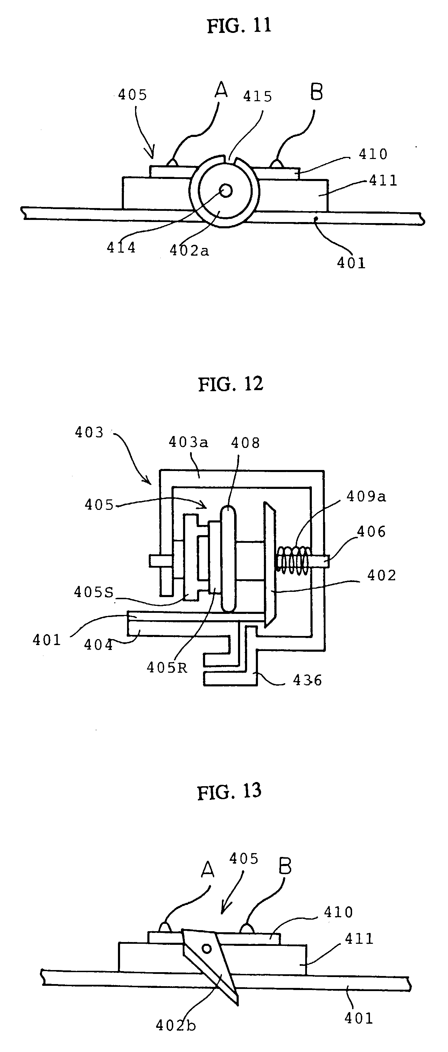

Fig. 11 shows a simple modification of the movable body illustrated in Fig. 10. In this example, a round cutting edge 402a is fixed to a side portion of the oscillator 411 through a shaft 414 and can slide in contact with the fixed cutting edge 401. The ultrasonic motor 405 is of a linear type consisting of the piezoelectric device 410 and the oscillator 411 and pressed against the upper surface of the fixed cutting edge 401 by a non-illustrated pressure applying mechanism. To the piezoelectric device 410 are applied alternating voltages having phases A and B which are shifted 90 degrees from each other, and the ultrasonic motor 405 can be linearly displaced in both directions by reversing the phase relationship of A and B. In a further modification of this embodiment, at least one notch 415 is provided in the round cutting edge 402a so that an uncut portion can be made every one revolution of the round cutting edge 402a. In other words, the paper which is a target of cutting remains to be uncut at only the notch 415 and the cutting process for making a perforation or the like is possible. Since the ultrasonic motor 405 moves on the fixed cutting edge 401 while generating friction, it can make a sudden stop by turning off application of the alternating voltage. Therefore, this facilitates a process for leaving an uncut point or the like on the paper as a target of cutting. In particular, use of the superimposed piezoelectric ceramics as the piezoelectric device 410 enables the linear displacement with high torque, and the round cutting edge 402a and the ultrasonic motor 405 can be self-propelled in the simplified structure without needing any power converting mechanism. Accordingly, the roller type cutter apparatus of the present invention is less likely to malfunction as compared with that of the prior art roller type cutter apparatus. Further, as different from the DC motor, the ultrasonic motor 405 hardly produces noise, it is preferable to applications requiring silence. Moreover, the ultrasonic motor 405 is basically voltage-driven and generates no magnetic field. Thus, it is suitable for applications which may be adversely affected by occurrence of the magnetic field.

Fig. 12 is a cross-sectional view typically showing another embodiment of the movable body 403 illustrated in Fig. 10. It is to be noted that like reference numerals denote like or corresponding parts illustrated in Fig. 10 for easy understanding. In this embodiment, the ultrasonic motor 405 is of a rotary type which shows rotary displacement, and the moving cutting edge (round cutting edge) 402 is subjected to direct rotary drive. As shown in the drawing, the rotary type ultrasonic motor 405 is made up of a combined use of a stator ring 405S and a rotor ring 405R. The stator ring 405S consists of an annular piezoelectric device and an oscillator, and the rotor ring 405R is brought into contact with the stator ring 405S developing friction therebetween in order to rotate. Rotation of the rotor ring 405R is transmitted to a ring 408 consisting of a rubber member or the like, and the movable body 403 is then self-propelled along the upper surface of the fixed cutting edge 401. In addition, the round cutting edge 402 is fixed to the rotor ring 405R through the shaft 406, the rotor ring 405R is directly rotary-driven as part of the rotary type ultrasonic motor 405. The round cutting edge 402 is pressed toward the fixed cutting edge 401 by a coil spring 409a.

Fig. 13 shows still another embodiment of the cutter apparatus according to the present invention. This embodiment is basically similar to the embodiment shown in Fig. 11, and like reference numerals denote like or corresponding parts for easy understanding. Unlike the foregoing embodiment, this embodiment uses a surface-mounted cutting edge 402b in place of the round cutting edge. This surface-mounted cutting edge 402b is directly attached to the surface of a linear type ultrasonic motor 405 and moves together with this motor in parallel with the fixed cutting edge 401. As apparent from comparison between Figs. 11 and 13, the structure of the movable body incorporated in the cutter apparatus is further simplified in this embodiment. Duration of life of the surface-mounted cutting edge 402b is, however, relatively-shorter than that of the round cutting edge 402a, and hence the surface-mounted cutting edge can be replaced and again attached to the ultrasonic motor 405.

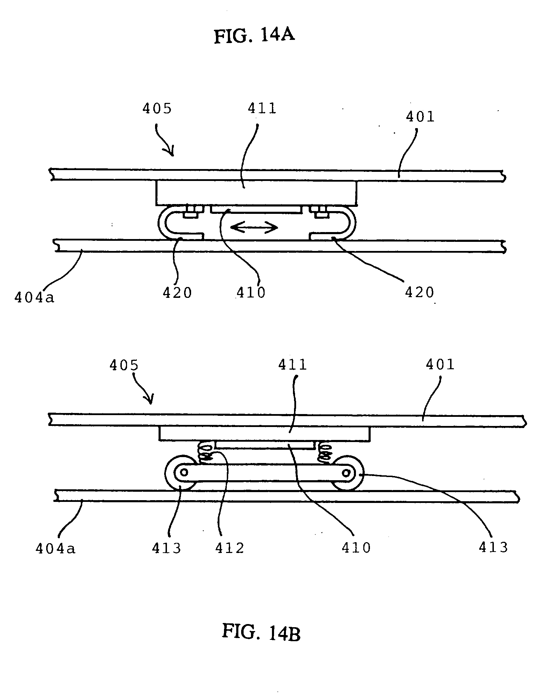

Fig. 14 shows an example of the specific structure of a pressure applying mechanism of the ultrasonic motor 405. It is to be noted that the basic structure is similar to that shown in Fig. 10B and like reference numerals denote like or corresponding parts for easy understanding. Fig. 14A shows the structure in which a leaf spring 420 is used as a pressure applying mechanism and a sliding system utilising energy stored in the spring is realised. In other words, the oscillator 411 configuring the linear type ultrasonic motor 405 is pressed against the fixed cutting edge 401 by the energy stored in the leaf spring 420. Frictional force generated between the oscillator 411 and the fixed cutting edge 401 causes the ultrasonic motor 405 to linearly displaces along the paper width direction. Here, the leaf spring 420 slides and moves on the surface of a slider 404a serving as a guide portion.

Fig. 14B shows the structure in which a roller guide system is adopted and is basically similar to Fig. 10B. The ultrasonic motor 405 composed of superimposed layers of piezoelectric device 410 and the oscillator 411 is pressed against the fixed cutting edge 401 by a pair of pressure springs 412. The ultrasonic motor 405 and the pressure springs 412 are supported by the roller 413. The roller 413 rolls on the surface of the slider 404a constituting the guide portion 404. As compared with the system adopting the leaf spring shown in Fig. 14A, the ultrasonic motor 405 can be further smoothly self-propelled. The pressure applying mechanism relative to the ultrasonic motor 405 is not restricted to these examples, and pressure may be applied to the ultrasonic motor 405 by using, e.g., magnetic attraction force of a magnet. Use of the magnetic force enables application of necessary pressure to the ultrasonic motor 405 without touching the motor 405, and constituent parts are hardly worn out.

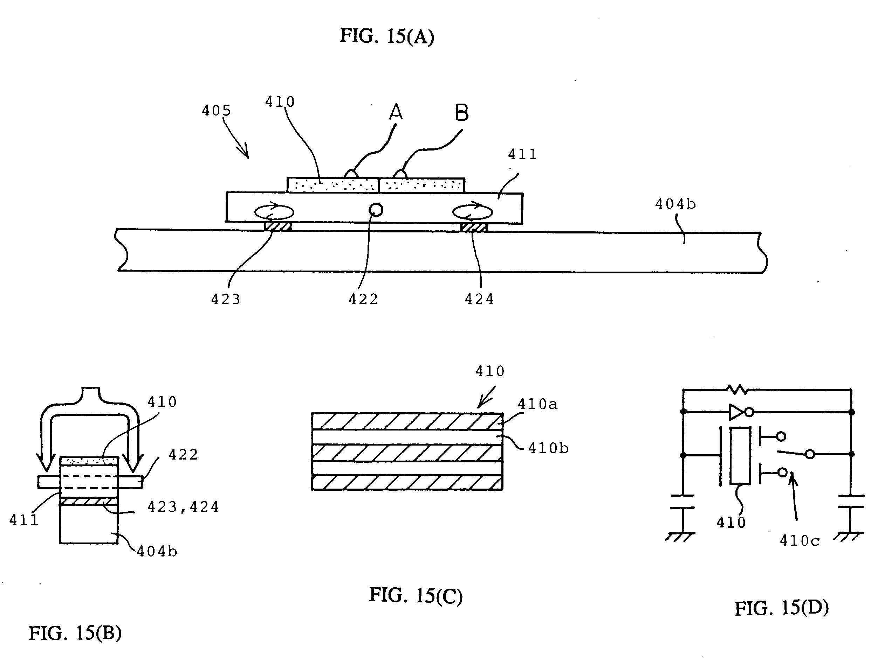

The structure and operation of the linear type ultrasonic motor will now be described in detail with reference to Fig. 15. Fig. 15A shows a shape of the ultrasonic motor 405 along a direction of the linear displacement, and Fig. 15B shows a cross section of the ultrasonic motor 405 orthogonal to a direction of the linear displacement. As shown in the drawing, the ultrasonic motor 405 demonstrates linear displacement on a rail 404b. Here, pressure is applied to a pin 422 fixed to the oscillator 411 downward, and the ultrasonic motor 405 is pressed against the rail 404b. A pair of friction members 423 and 424 are mounted on the bottom surface of the oscillator 411. Further, two piezoelectric devices 410 separated from each other are attached on the top surface of the oscillator 411. Application of high-frequency voltages having phases A and B which are shifted 90 degrees from each other to the pair of piezoelectric devices 410 causes the oscillator to carryout the elliptic motion at a part where the friction members 423 and 424 are fixed as shown by the arrow. This elliptic motion enables the ultrasonic motor 405 to obtain drive force through friction force and to be self propelled in a direction along the rail 404b. In addition, changing over the phase relationship of the high-frequency voltages having the phases A and B also reverses a direction for moving the ultrasonic motor 405. In this manner, since the linear type ultrasonic motor obtains the linear displacement drive force by utilising frictional force with respect to the rail 4b, friction of the pair of friction members 423 and 424 determines duration of life of the linear motor 405. Material of the friction members 423 and 424 must be appropriately determined in order to prolong duration of life of the ultrasonic motor 405. The DC motor is current driven whereas the ultrasonic motor is basically voltage driven, and realisation of low-voltage drive is desired when applying the ultrasonic motor to the cutter apparatus. Further, an oscillating circuit must be incorporated as a drive circuit instead of a simple constant-current circuit in order to output a high-frequency voltage, which leads to the relatively-complicated structure. As a specification of such a drive circuit, the power supply voltage is 12V and the rated current is approximately 0.2 - 0.3A, for example. The ultrasonic motor 405 is actually driven by the alternating voltage of, e.g., 100kHz, and its crest value is approximately 40 - 60Vp-p. Pressure applied to the ultrasonic motor 405 is, e.g., approximately 100g - 400g. Incidentally, as shown in Fig. 15C, a high-output torque can be obtained by using a superimposed piezoelectric device 410 in which a plurality of electrodes 410a and piezoelectric ceramics 410b are alternately superimposed one on another, and a self-excited drive system employing the piezoelectric device 410 in the oscillating circuit as a part of the drive circuit may be adopted as shown in Fig. 15D. In this case, a direction of the ultrasonic motor is changed over by a switch 410c.

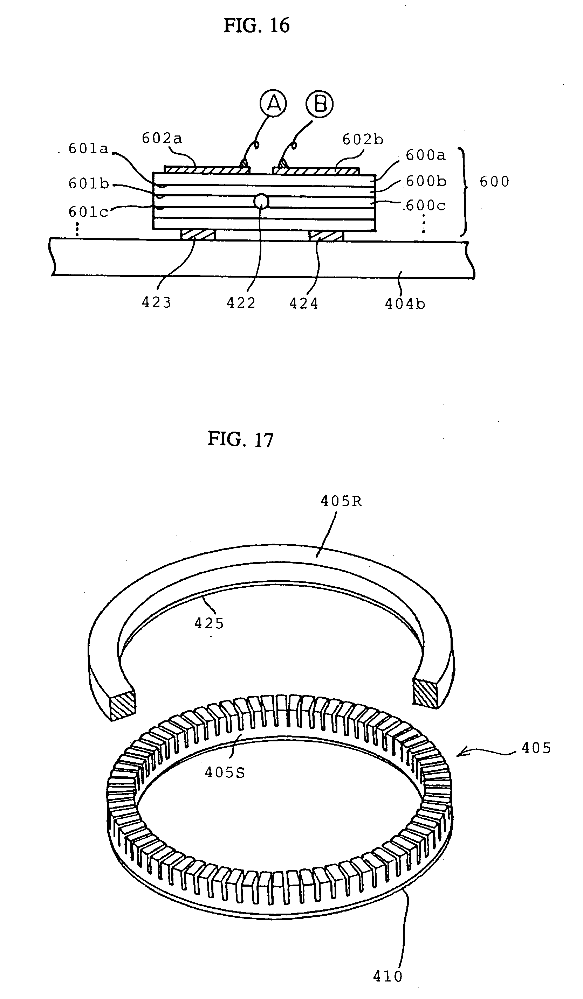

Fig. 16 shows an embodiment of a linear type ultrasonic motor serving as a drive source for the movable body 403 of the cutter apparatus according to the present invention. As a basic structure of the cutter apparatus is similar to that shown in Fig. 10B. The linear type ultrasonic motor used in this embodiment is constituted by a superimposed piezoelectric device 600 in which electrodes 601a, 601b, 601c, ... and piezoelectric devices 600a, 600b, 600c, ... are alternately superimposed one on another and, as different from the linear type ultrasonic motor in structure, the superimposed piezoelectric device 600 itself characteristically functions as an oscillator.

By configuring the linear type ultrasonic motor in this manner, the greater thrust can be obtained and the piezoelectric device does not have to be connected to the oscillator, thus realising a less expensive cutter apparatus. Moreover, external electrodes 602a, 602b, -.. are formed on one end surface of the superimposed piezoelectric device 600 in the superimposing direction, and predetermined electric drive signals are input to the respective external electrodes for drive. A pair of friction members 423 and 424 are mounted on the other end surface of the superimposed piezoelectric device 600 in the superimposing direction, i.e., the end surface at which the device slides on the rail 404b.

Fig. 17 is an exploded perspective view typically showing the specific structure of a rotary type ultrasonic motor 405 illustrated in Fig. 12. As mentioned above, the rotary type ultrasonic motor 405 basically consists of a combination of the stator ring 405S and the rotor ring 405R. The stator ring 405S is composed of an oscillator having irregularities formed thereon in the circumferential direction, and it has an annular piezoelectric device 410 connected thereto at the bottom portion. Further, a surface of the rotor ring 405R with which the stator ring 405S is in contact is lined with a friction material (lining material) 425.

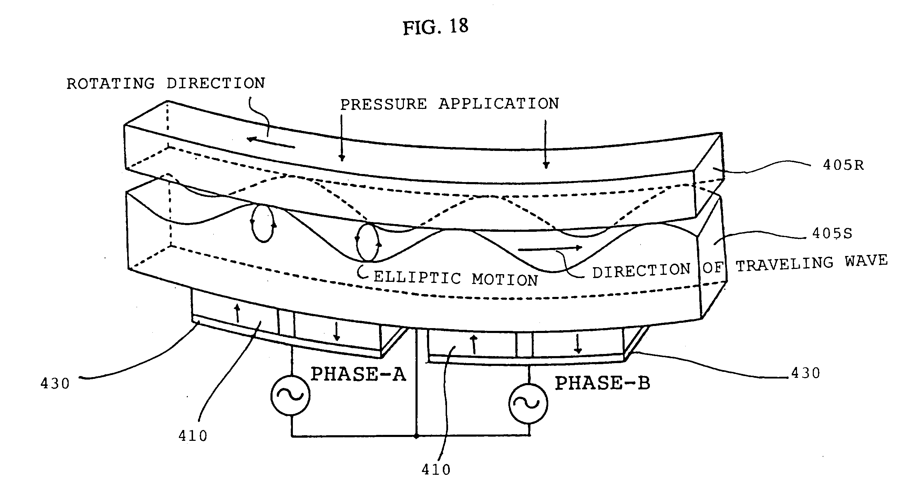

Fig. 18 typically shows the operation of a rotary type ultrasonic motor 405 illustrated in Fig. 17. As shown in the drawing, a pair of piezoelectric devices 410 consisting of piezoelectric ceramics or the like are connected to the bottom portion of the stator ring 405S at appropriate intervals. An alternating voltage having a phase A is applied to one piezoelectric device 410 through an electrode 430. Similarly, an alternating voltage having a phase B is applied to the other piezoelectric device 410 through the electrode 430. The phases A and B are, for example, since and cosine waves, respectively, and they are 90 degrees out of phase from each other. In this manner, application of the alternating voltages having the phases A and B to a pair of piezoelectric devices 410 causes a travelling wave propagating in the right-hand-side direction to be generated in the stator ring 405S. It is to be noted that reversing the phase relationship of the phases A and B also reverses a direction of the travelling wave. The rotor ring 405R is provided on the stator ring 405S in which the travelling wave is generated. When pressure is applied to the rotor ring 405R downward, the rotor ring 405R receives the tangential force caused due to the elliptic motion demonstrates the rotary movement at a part where it is brought into contact with the wave front. In this way, the rotor ring 405R overlaps on the stator ring 405S, the travelling wave is generated in the stator ring 405S. The rotor ring 405R is pressed downwards by a strong pressure. Each point on the surface of the stator ring 405S generating the wave carries out the elliptic motion having the amplitude of several µm. Since the surface of the rotor ring 405R is in contact with the wave front of the wave motion, the elliptic motion induces the rotor ring 405R to rotate. As shown In Fig. 17, the actual rotary type ultrasonic motor has a groove formed on the stator ring 405S and has a sinking-comb-like structure. Adoption of the sinking-comb-like structure can increase the amplitude of the elliptic motion. Also, the effect for shedding the powder produced by friction on the groove can be expected. Rotation is transmitted via the thin lining material (friction material) 425 provided between the stator ring 405S and the rotary ring 405R. Provision of the lining material 425 helps to prevent the useful life of the rotary ring being reduced due to friction. Here, assuming that one elliptic motion causes the rotor ring 405R to move 1µm, 30,000 elliptic motions per one second can rotate the rotor ring 405R at 3 cm/second. In order to drive the ultrasonic motor, there is required a drive circuit for converting the d.c. power supply voltage into alternating voltages having two phases (sine and cosine waves). A drive frequency is set to a value with which the strong mechanical resonance of the stator ring 405S is apt to be generated.

As mentioned above, according to the present invention, the movable body incorporated in the cutter apparatus has the ultrasonic motor therein as a drive source to be self propelled along the guide portion. Such a structure can eliminate drive mechanisms such as the DC motor, pulleys, the wire and others in the prior art, thereby compacting the structure of the cutter apparatus. Further, adoption of the ultrasonic motor enables the sudden stop of the moving cutting edge, and hence an uncut point can be readily made on the paper Further, use of the superimposed piezoelectric device incorporated in the ultrasonic motor can realise the linear type ultrasonic motor having a large thrust and enables the moving cutting edge to be self-propelled without requiring any power converting mechanism. The malfunction rate is, therefore, reduced. Also, when the rotary type ultrasonic motor is used, the self-propelling action of the moving cutting edge becomes possible as well as the direct rotary drive relative to the round cutting edge. Since the ultrasonic motor produces less noise as compared with the prior art DC motor, it is preferable for applications where silence is needed. Further, the ultrasonic motor generates no magnetic field like the DC motor, and hence it is suitable for applications that the magnetic field adversely affects.

While this invention has been described with reference to illustrative embodiments, this description is not intended to be construed in a limiting sense. Various modifications of the illustrative embodiments, as well as other embodiments of the invention, will be apparent to persons skilled in the art upon reference to this description. It is, therefore, contemplated that the appended claims will cover any such modifications or embodiments as fall within the true scope of the invention.

The aforegoing description has been given by way of example only and it will be appreciated by a person skilled in the art that modifications can be made without departing from the scope of the present invention.

## Claims

1. A paper cutter apparatus comprising:
a fixed cutting edge (2, 401);
a movable cutting edge (3, 402);
means for supporting said movable edge (4, 403);
means for guiding said movable edge (3, 402) to move relative to said fixed edge (2, 401) so that the fixed and movable edges cooperate to cut the paper, characterised in that
an ultrasonic motor (5, 405) is provided for moving said movable edge (3, 402).

2. A cutter apparatus according to claim 1 wherein the ultrasonic motor (5, 405) is of a linear type which transmits linear motion.

3. A cutter apparatus according to claim 1 wherein the ultrasonic motor (5, 405) is of a rotary type which transmits rotary motion.

4. A cutter apparatus according to any preceding claim wherein the ultrasonic motor (5, 405) comprises a piezoelectric device (13, 410) and an oscillator (11, 411).

5. A cutter apparatus according to any preceding claim wherein the piezoelectric device is a multi-layer comprising alternate layers of electrodes (13a, 410a) and piezoelectric ceramics (13b, 410b).

6. A cutter apparatus according to any of claims 1 to 3 and 5 wherein the ultrasonic motor is of a self excited drive type wherein the piezoelectric device (30, 600) functions as both a piezoelectric device and an oscillator.

7. A cutter apparatus according to any preceding claim wherein the ultrasonic motor comprises pressure applying means (6,7,14; 50a; 412, 413; 405R) for applying pressure towards the oscillating portion of the ultrasonic motor thereby converting the motion of the oscillating portion into frictional force which moves the movable edge.

8. A cutter apparatus according to any preceding claim wherein the movable cutting edge is substantially linear (3).

9. A cutter apparatus according to claim 8 wherein the means for supporting said movable edge comprises a slider (4) which is supported by the ultrasonic motor and allows the ultrasonic motor to move the movable edge towards and away from the stationery edge to cut the paper.

10. A cutter apparatus according to claim 9 wherein a slit (1) is provided to guide the paper between the stationery cutting edge and the movable cutting edge.

11. A cutter apparatus according to claims 8, 9 or 10 as dependent on claim 3 wherein the rotary motion of the ultrasonic motor is converted into linear motion of the slider by transmission means (22, 23, 24, 25).

12. A cutter apparatus according to any preceding claim wherein the means for guiding said movable cutting edge is a guide portion (404) which guides the movable cutting edge along the stationery cutting edge.

13. A cutter apparatus according to claim 12 wherein the means for supporting the movable cutting edge is a movable body (403) which engages the guide portion (404) wherein the movable body comprises the ultrasonic motor (405) which self-propels the movable body along the guide portion.

14. A cutter apparatus according to claim 13 wherein the movable cutting edge is round (402) and is supported on a drum (407) which is rotatably supported on the movable body and motion of said movable body along said guide portion induces the movable cutting edge to rotate and to slide in contact with the stationery cutting edge thereby cutting the paper.

15. A sliding type cutter apparatus which cuts paper along a direction of a width of the paper comprising:
a slit (1) extending along the paper width direction so as to pass the paper therethrough;
a fixed cutting edge (2) provided on one edge of the slit;
a movable cutting edge (3), provided on the other edge of the slit, which can slide towards or away from the fixed cutting edge, overlaps on the fixed cutting edge to cut the paper when moved to the front position, and is separated from the fixed cutting edge to allow passage of the recording paper therebetween when moved to the rear position; and
an ultrasonic motor (5) for ensuring the movable cutting edge to reciprocate between the front and rear positions.

16. A rotary type cutter apparatus comprising a fixed cutting edge (401), a moving cutting edge (402), a movable body (403) and a guide portion (404) to cut paper along the paper width direction, the fixed cutting edge being fixedly provided along the paper width direction, the guide portion being extended in parallel with the fixed cutting edge, the movable body being capable of engaging with the guide portion to move along the paper width direction, the moving cutting edge being incorporated in the movable body and sliding in contact with the fixed cutting edge to cut the paper sandwiched therebetween along the paper width direction, the cutter apparatus characterised in that the movable body has an ultrasonic motor (405) therein and is self-propelled along the guide portion.

17. A cutter apparatus according to any preceding claim, wherein the cutter apparatus is for a printer and the paper is recording paper having information printed by the printer thereon.
